# EUROPÄISCHE PATENTSCHRIFT

(11) **EP 2 167 947 B1**
(45) Veröffentlichungstag und Bekanntmachung des Hinweises auf die Patenterteilung: **22.12.2010**
(21) Anmeldenummer: 08784721.6
(22) Anmeldetag: 11.07.2008
(51) Int. Cl.: G01N 21/88, G01B 11/25, G01B 11/30

(54) **VERFAHREN UND VORRICHTUNG ZUM OPTISCHEN INSPIZIEREN EINER OBERFLÄCHE EINES GEGENSTANDS**
METHOD AND DEVICE FOR THE OPTICAL INSPECTION OF A SURFACE OF AN OBJECT
PROCÉDÉ ET DISPOSITIF D'INSPECTION OPTIQUE D'UNE SURFACE D'UN OBJET

(30) Priorität: 12.07.2007 DE 102007034689
(43) Veröffentlichungstag der Anmeldung: 31.03.2010
(73) Patentinhaber: Carl Zeiss AG, 73447 Oberkochen (DE)
(72) Erfinder: KNUPFER, Klaus, 73457 Essingen (DE); SPRUCK, Bernd, 73563 Mögglingen (DE); KIMMIG, Wolfgang, 73430 Aalen (DE); BECK, Rolf, 73728 Esslingen (DE)
(86) Internationale Anmeldenummer: PCT/EP2008/005682
(87) Internationale Veröffentlichungsnummer: WO 2009/007129

(56) Entgegenhaltungen:
- EP-A- 1 170 572
- DE-A1- 10 108 221
- DE-A1-102004 033 526
- JP-A- 11 063 959
- JP-A- 2001 059 717
- US-A- 5 726 705

## Beschreibung

Die vorliegende Erfindung betrifft ein Verfahren zum optischen Inspizieren einer Oberfläche an einem Gegenstand, insbesondere zum Inspizieren einer reflektierenden Oberfläche an einem Kraftfahrzeug gemäß dem Oberbegriff des Anspruchs 1.

Die Erfindung betrifft ferner eine Vorrichtung zum optischen Inspizieren einer Oberfläche an einem Gegenstand, insbesondere zum Inspizieren einer reflektierenden Oberfläche an einem raftfahrzeug gemäß dem Oberbegriff des des Anspruchs 15.

Ein solches Verfahren und eine solche Vorrichtung sind aus US 5,726,705 und DE 103 17 078 A1 bekannt.

Bei der industriellen Fertigung von Produkten spielt die Qualität der Produkte seit vielen Jahren eine immer wichtigere Rolle. Eine hohe Qualität kann einerseits durch entsprechend ausgelegte, stabile Fertigungsprozesse erreicht werden. Andererseits müssen die relevanten Qualitätsparameter eines Produktes möglichst zuverlässig und vollständig kontrolliert werden, um Qualitätsmängel frühzeitig zu erkennen. In vielen Fällen spielt die Qualität einer Oberfläche eine wichtige Rolle für die Produkteigenschaften. Dabei kann es sich um dekorative Oberflächen handeln, wie beispielsweise Lackoberflächen bei Kraftfahrzeugen, oder um technische Oberflächen, wie z.B. die Oberflächen von feinbearbeiteten metallischen Kolben oder Lagerflächen.

Es gibt bereits eine Vielzahl von Vorschlägen und Konzepten, um solche Oberflächen automatisiert zu inspizieren. Häufig sind die bekannten Verfahren und Vorrichtungen jedoch nur für einen speziellen Anwendungsfall einsetzbar, weil sie ein hohes a priori-Wissen über die zu inspizierende Oberfläche voraussetzen. Darüber hinaus sind die bekannten Verfahren und Vorrichtungen für viele Anwendungsfälle noch nicht ausgereift genug, um eine effiziente und vor allem zuverlässige Inspektion von Oberflächen unter Industriebedingungen zu ermöglichen. Daher wird beispielsweise in der Automobilindustrie bis heute in erheblichem Ausmaß eine visuelle Inspektion von Lackoberflächen durch entsprechend erfahrene und geschulte Personen durchgeführt. Der Automatisierungsgrad bei der Inspektion der Lackoberflächen ist wesentlich geringer als beispielsweise der Automatisierungsgrad in der Fertigung selbst. Ein Beispiel für eine Vorrichtung zur visuellen Inspektion einer Lackoberfläche ist in US 5,636,024 beschrieben. Die bekannte Vorrichtung beinhaltet einen Tunnel, durch den die Kraftfahrzeuge mit den zu inspizierenden Lackoberflächen transportiert werden. An den Innenwänden des Tunnels befinden sich streifenförmige Lichtquellen, die ein Streifenmuster aus hellen und dunklen Streifen erzeugen. Diese Streifenmuster werden von der Lackoberfläche der Kraftfahrzeuge reflektiert. Die Inspektion der Lackoberfläche wird von Personen durchgeführt, die im Tunnel stehen und die Reflexionen der Streifenmuster an der Lackoberfläche visuell prüfen. Es ist leicht nachvollziehbar, dass eine solche Vorgehensweise in erheblichem Ausmaß von den Fähigkeiten des Beobachters abhängt und daher nur eine begrenzte Zuverlässigkeit bietet. Außerdem ist eine solche Vorgehensweise arbeitsintensiv und dementsprechend teuer.

Die eingangs genannte DE 103 17 078 A1 beschreibt ein Verfahren und eine Vorrichtung, bei denen ein Streifenmuster mit einem sinusförmigen Helligkeitsverlauf auf einen Schirm projiziert wird, der schräg über der zu inspizierenden Oberfläche angeordnet ist. Das projizierte Muster wird verändert oder bewegt, so dass entsprechend veränderte Streifenmuster auf die Oberfläche fallen. Während oder nach dem Verändern/Bewegen des Musters wird jeweils mindestens ein Abbild der Oberfläche mit dem reflektierten Muster aufgenommen. Durch eine mathematische Verknüpfung der zu verschiedenen Zeitpunkten aufgenommenen Bilder soll ein Ergebnisbild erzeugt werden, anhand dessen defektbehaftete Bereiche und defektfreie Bereiche der Oberfläche rechnerisch und/oder visuell unterschieden werden können. Ein ähnliches Verfahren und eine ähnliche Vorrichtung sind aus DE 198 21 059 C2, aus US 6,100,990, aus einer Publikation von Markus Knauer, "Vermessung spiegelnder Oberflächen - Eine Aufgabe der optischen 3D-Sensorik", erschienen in der DE-Zeitschrift Photonik, Ausgabe 4/2004, Seiten 62-64 oder aus einer Publikation von Sören Kammel, "Deflektometrie zur Qualitätsprüfung spiegelnd reflektierender Oberflächen", erschienen in der DE-Zeitschrift tm - Technisches Messen, Ausgabe 4/2003, Seiten 193-198 bekannt. All diese bekannten Verfahren und Vorrichtungen besitzen den Nachteil, dass nur relativ kleine Oberflächen inspiziert werden können, die in einer zumindest weitgehend bekannten und definierten Position und Ausrichtung zu dem Projektionsschirm mit dem Streifenmuster angeordnet sind. Eine zuverlässige und effiziente Inspektion von Lackoberflächen bei Kraftfahrzeugen ist mit diesen Vorrichtungen nicht möglich.

Aus einer Publikation von R. Seulin et al., "Dynamic Lighting System for Specular Surface Inspection", erschienen in Proceedings of SPIE, Vol. 4301 (2001), Seiten 199-206, sind ein Verfahren und eine Vorrichtung bekannt, bei denen ein Streifenmuster mit scharf voneinander abgegrenzten, hellen und dunklen Streifen verwendet wird. Das Streifenmuster fällt auf die zu inspizierende Oberfläche. Eine Kamera blickt senkrecht von oben auf die zu inspizierende Oberfläche. Bei einer defektfreien Oberfläche sieht die Kamera genau die hellen und dunklen Streifen. Ein Oberflächendefekt, wie etwa eine Beule, hat jedoch zur Folge, dass Licht von einem hellen Streifen in das Abbild eines dunklen Streifens abgelenkt wird, so dass in dem Abbild des dunklen Streifens ein heller Lichtpunkt sichtbar ist. Um eine Oberfläche vollflächig zu inspizieren, müssen die hellen Streifen über die Oberfläche wandern, was entweder durch Bewegen des Gegenstandes mit der zu inspizierenden Oberfläche oder durch Verändern des Streifenmusters erreicht werden kann. Letzteres ist nach der Publikation die bevorzugte Variante, weil eine vollflächige Inspektion bei komplexen Geometrien ansonsten nicht gewährleistet sei. Um störende Einflüsse von Fremdlicht zu vermeiden, soll der Gegenstand mit der zu inspizierenden Oberfläche in einem Tunnel angeordnet sein. Wenngleich dieses Verfahren prinzipiell die Inspektion von großen Oberflächen ermöglicht, ist es im Hinblick auf die eingangs beschriebenen Anforderungen nicht optimal. Es bestehen Zweifel an der Erkennungssicherheit bzw. Zuverlässigkeit des Verfahrens. Darüber hinaus muss die Kamera möglichst senkrecht zu der zu inspizierenden Oberfläche ausgerichtet sein, was eine effiziente Oberflächeninspektion von beliebig geformten Gegenständen erschwert.

Aus der eingangs genannten US 5,726,705 sind ein Verfahren und eine Vorrichtung zur Inspektion einer Kraftfahrzeugoberfläche gemäß dem Oberbegriff des Anspruchs 1 bekannt. Das Kraftfahrzeug wird hier mit einem Fördermechanismus durch eine brückenartige Anordnung transportiert, an der eine Vielzahl von Kameras entlang der Querschnittsfläche der Anordnung verteilt sind. Die Kraftfahrzeugoberfläche wird mit einem Streifenmuster aus scharf aneinander angrenzenden, hellen und dunklen Streifen beleuchtet. Die Auswertung der Kamerabilder erfolgt ähnlich, wie in der Publikation von Seulin beschrieben ist. Die Schwächen dieser Vorgehensweise zeigen sich bei US 5,726,705 beispielsweise darin, dass für die Inspektion der Motorhaube ein anderer Satz von Kameras benötigt wird als für die Inspektion des Daches des Kraftfahrzeuges. Daher werden sehr viele Kameras benötigt, was einen hohen Investitions- und Bildverarbeitungsaufwand zur Folge hat. Des weiteren bestehen auch bei diesem System Zweifel, ob alle denkbaren Oberflächendefekte, wie insbesondere kleine Kratzer, Pickel, Krater, Poren etc. zuverlässig erkannt werden.

Vor diesem Hintergrund ist es eine Aufgabe der vorliegenden Erfindung, ein Verfahren und eine Vorrichtung anzugeben, um eine Oberfläche weitgehend automatisiert, schnell und zuverlässig zu inspizieren. Vorzugsweise sollen das Verfahren und die Vorrichtung universell einsetzbar sein, und sie sollen sich für die Inspektion von großen Oberflächen eignen, insbesondere zur Inspektion von Lackoberflächen bei Kraftfahrzeugen.

Diese Aufgabe wird nach einem Aspekt der Erfindung durch ein Verfahren der eingangs genannten Art gelöst, mit den im kennzeichnenden Teil des Anspruchs 1 angegebenen Merkmalen.

Nach einem weiteren Aspekt der Erfindung wird diese Aufgabe durch eine Vorrichtung der eingangs genannten Art gelöst mit den im kennzeichnenden Teil des Anspruchs 15 angegebenen Merkmalen.

Bei dem neuen Verfahren und der neuen Vorrichtung kann ein unveränderliches, konstantes Muster stationär im Bereich der Bewegungsbahn angeordnet sein, entlang der der Gegenstand mit der zu inspizierenden Oberfläche verschoben wird. Prinzipiell kann das Muster trotzdem veränderlich sein. Es wird jedoch für die aufeinanderfolgende Aufnahme des ersten und der weiteren Abbilder konstant gehalten. Die relative Bewegung bzw. Veränderung des Streifenmusters in Bezug auf die Oberfläche wird vielmehr durch die Bewegung des Gegenstandes bzw. seiner Oberfläche erreicht. Diese Vorgehensweise ermöglicht die Inspektion von beliebig großen Oberflächen, weil die Oberfläche an dem stationären Muster vorbeigeführt wird. Eine große Oberfläche wird also abgetastet, wobei die Vorschubbewegung des Objekts prinzipiell kontinuierlich oder schrittweise erfolgen kann, je nach dem wie schnell die Bildverarbeitung erfolgt.

Da die Distanz, um die der Gegenstand mit der zu inspizierenden Oberfläche zwischen zwei Aufnahmen vorgeschoben wird, gleich dem definierten Abstand ist, an dem die zumindest zwei Abbilder aufgenommen werden, zeigen die zumindest zwei getrennt voneinander aufgenommenen Abbilder jeweils genau denselben Oberflächenabschnitt. Etwas genauer zeigen die zumindest zwei Abbilder jeweils identische Oberflächenpunkte, allerdings bei verschiedenen Relativpositionen bezogen auf das Muster. Dies hat zur Folge, dass sich unterschiedliche Musterbereiche in dem mehrfach aufgenommenen Oberflächenpunkt widerspiegeln. Damit stehen zu jedem Oberflächenpunkt mehrere Abbilder mit unterschiedlichen Bildinhalten zur Verfügung, was eine erhöhte Informationsdichte und damit eine detaillierte Bestimmung von lokalen Oberflächeneigenschaften ermöglicht.

Das neue Verfahren und die neue Vorrichtung ermöglichen also eine schnelle und unkomplizierte Aufnahme von mehreren Abbildern ein und desselben Oberflächenpunktes der zu inspizierenden Oberfläche. Diese Eigenschaft ist besonders vorteilhaft in Kombination mit der Verwendung eines Musters, das einen sich kontinuierlich ändernden Helligkeitsverlauf mit einer definierten Periode bildet, weil sich die Abbilder der verschiedenen Bildaufnahmeeinheiten schon bei geringen Vorschüben voneinander unterscheiden. Bevorzugt besitzt das Muster einen kontinuierlichen, sinusförmigen Helligkeitsverlauf. Es kann jedoch prinzipiell auch ein sägezahneförmiger oder ein anderer periodischer Helligkeitsverlauf sein, sofern sich die Helligkeit über die Periode zumindest weitgehend kontinuierlich verändert und sofern die streifen des Helligheitsverlaufs spiralförmig an den Gegenstand umschließenden Innenwänden eines Innenraums entlang laufen gemäß Anspruch 1. Wie weiter unten anhand von bevorzugten Ausführungsbeispielen beschrieben wird, eignen sich das neue Verfahren und die neue Vorrichtung insbesondere, um sehr große Oberflächen mit Hilfe von deflektometrischen Auswerteverfahren zu inspizieren, wie sie beispielsweise in den eingangs genannten Publikationen von Kammel und Knauer beschrieben sind. Solche deflektometrischen Auswerteverfahren ermöglichen eine sehr genaue und zuverlässige Detektion von verschiedenen Arten von sehr kleinen Oberflächendefekten Kratzern, Pickeln, Kratern, Poren etc. Daher lassen sich das neue Verfahren und die neue Vorrichtung sehr vielseitig einsetzen.

Prinzipiell lassen sich das neue Verfahren und die neue Vorrichtung jedoch auch mit anderen Auswerteverfahren kombinieren, beispielsweise solchen, wie sie vom sogenannten Shape-from-Shading bekannt sind. Vorteilhafterweise besitzt das Streifenmuster in einem solchen Fall einen Helligkeitsverlauf, der sich lediglich über eine Periode erstreckt, deren Länge in etwa der Länge des zu inspizierenden Gegenstandes entspricht oder noch länger ist. Eine solche Ausgestaltung des Verfahrens und der Vorrichtung eignet sich besonders gut zur Inspektion von matten Oberflächen.

Insgesamt ermöglichen das neue Verfahren und die neue Vorrichtung eine sehr kostengünstige, detailgenaue und schnelle Inspektion von großen Oberflächen, wie nachfolgend anhand von bevorzugten Ausführungsbeispielen dargestellt ist.

Die oben angegebene Aufgabe ist daher vollständig gelöst.

In einer bevorzugten Ausgestaltung der Erfindung beinhaltet das weitere Abbild zumindest ein zweites und ein drittes Abbild, wobei der Gegenstand mit der Oberfläche zwischen dem zweiten und dem dritten Abbild erneut um die definierte Distanz verschoben wird, und wobei das zweite und das dritte Abbild im gleichen definierten Abstand zueinander aufgenommen werden, wie das erste und das zweite Abbild.

In dieser Ausgestaltung werden auf sehr effiziente Weise zumindest drei Abbilder von ein und demselben Oberflächenpunkt aufgenommen. Damit eignet sich diese Ausgestaltung besonders gut, um die Abbilder deflektometrisch auszuwerten. Bei der deflektometrischen Auswertung wird die jeweilige Phase in den Abbildern des sich periodisch ändernden Helligkeitsverlauf bestimmt. Diese Phase korreliert an jedem Oberflächenpunkt mit dessen lokaler Oberflächenneigung. Anhand der Phase von zumindest drei Abbildern lässt sich daher die lokale Oberflächenneigung zu jedem Oberflächenpunkt bestimmen. Abrupte Änderungen der lokalen Oberflächenneigung zwischen benachbarten Oberflächenpunkten deuten auf einen Kratzer oder einen anderen lokal begrenzten Oberflächendefekt hin. Der Vorteil der deflektometrischen Auswertung liegt im Hinblick auf die vorliegende Erfindung darin, dass Oberflächendefekte in der Regel sehr starke Änderungen der lokalen Oberflächenneigung hervorrufen, wohingegen die absoluten Abmessungen des Oberflächendefektes sehr klein sein können. Die bevorzugte Ausgestaltung ermöglichen eine sehr schnelle und genaue Detektion gerade von solch kleinen Oberflächendefekten.

In einer weiteren bevorzugten Ausgestaltung der Erfindung wird das erste Abbild mit einer ersten Bildaufnahmeeinheit aufgenommen und das zumindest eine weitere Abbild wird mit zumindest einer weiteren Bildaufnahmeeinheit aufgenommen, wobei die erste und die zumindest eine weitere Bildaufnahmeeinheit in dem definierten Abstand zueinander angeordnet sind. Vorzugsweise sind die Bildaufnahmeeinheiten dieser Ausgestaltung stationär angeordnet.

Die Verwendung von mehreren, vorzugsweise stationären Bildaufnahmeeinheiten besitzt in diesem Zusammenhang den Vorteil, dass die verschiedenen Abbilder zu jedem Oberflächenpunkt mit einer zeitlichen Überlappung aufgenommen werden können. Es kann also schon ein erstes Abbild eines weiter vorn liegenden Oberflächenpunktes aufgenommen werden, während zeitgleich ein zweites oder drittes Abbild eines weiter hinten liegenden Oberflächenpunktes aufgenommen wird. Dies Ausgestaltung ermöglicht somit eine sehr schnelle und effiziente Bildaufnahme bei großen Oberflächen. Stationäre Bildaufnahmeeinheiten lassen sich außerdem bei der Montage der Vorrichtung sehr exakt und stabil ausrichten und können besser gegen Vibrationen, Erschütterungen etc. geschützt werden. Die Genauigkeit und Robustheit des neuen Verfahrens und der neuen Vorrichtung sind einfacher zu gewährleisten.

In Ergänzung zu der zuvor erwähnten Ausgestaltung beinhaltet die weitere Bildaufnahmeeinheit vorzugsweise zumindest eine zweite und eine dritte Bildaufnahmeeinheit, wobei die zweite und die dritte Bildaufnahmeeinheit im gleichen definierten Abstand zueinander angeordnet sind, wie die erste und die zweite Bildaufnahmeeinheit. Besonders vorteilhaft ist es, wenn das neue Verfahren und die neue Vorrichtung zumindest vier Bildaufnahmeeinheiten verwenden, die mit dem definierten Abstand hintereinander gestaffelt sind, wobei der definierte Abstand mit der Distanz korrespondiert, um die die zu inspizierende Oberfläche für jede Bildaufnahme verschoben wird. Diese Ausgestaltung ermöglich eine besonders einfache und schnelle Bildaufnahme und -auswertung nach der so genannten 4-Bucket-Methode.

In einer weiteren bevorzugten Ausgestaltung sind die Bildaufnahmeeinheiten Zeilenkameras, die jeweils eine linienförmige Anordnung von Bildpunkten besitzen.

Alternativ hierzu könnten die Bildaufnahmeeinheiten auch Flächenkameras mit einer matrixartigen Anordnung von Bildpunkten sein.

Zeilenkameras besitzen den Vorteil, dass die Bildpunkte sehr schnell ausgelesen werden können. Außerdem sind Zeilenkameras auch bei sehr hohen Auflösungen kostengünstig. Demgegenüber besitzen Flächenkameras mit einer matrixartigen Anordnung von Bildpunkten den Vorteil, dass Oberflächenpunkte, die in der Vorschubrichtung hintereinander liegen, in einem Abbild aufgenommen werden können, so dass der Gegenstand über größere Distanzen vorgeschoben werden kann. Dadurch lässt sich die Triggerung, mit der die Bildaufnahme in Abhängigkeit vom Vorschub des Gegenstandes ausgelöst wird, vereinfachen. Außerdem besitzen kommerzielle Flächenkameras in der Regel eine höhere Lichtstärke als Zeilenkameras, was die Anforderungen an die Leuchtkraft des Musters reduziert.

In einer weiteren bevorzugten Ausgestaltung besitzen die erste und die weiteren Bildaufnahmeeinheiten jeweils eine Blickrichtung, wobei die Blickrichtungen weitgehend parallel zueinander sind.

In dieser Ausgestaltung besitzen die Bildaufnahmeeinheiten parallele "Sehfächer". Aufgrund dieser Ausgestaltung lassen sich die nacheinander aufgenommenen Abbilder eines Oberflächenpunktes sehr einfach und schnell miteinander vergleichen und/oder zueinander in Beziehung setzen.

In einer weiteren bevorzugten Ausgestaltung bilden die erste Bildaufnahmeeinheit und die weiteren Bildaufnahmeeinheiten einen integrierten Kamerakopf. An diesem Kamerakopf sind die erste und die weiteren Bildaufnahmeeinheiten mit dem definierten Abstand zueinander fest angeordnet.

Diese Ausgestaltung ermöglicht eine sehr robuste und montagefreundliche Realisierung der neuen Vorrichtung. Außerdem kann durch die Integration der Bildaufnahmeeinheiten in einem Kamerakopf eine sehr exakte Ausrichtung der einzelnen Bildaufnahmeeinheiten relativ zueinander erreicht werden, was die Genauigkeit und Zuverlässigkeit des neuen Verfahrens erhöht.

In einer weiteren bevorzugten Ausgestaltung werden das erste Abbild und das zumindest eine weitere Abbild mit einer Bildaufnahmeeinheit aufgenommen, die zusammen mit dem Gegenstand verschoben wird. Vorteilhafterweise ist die Bildaufnahmeeinheit dieser Ausgestaltung mit der Aufnahme bzw. dem Träger gekoppelt, der den Gegenstand mit der Oberfläche relativ zu dem Muster bewegt.

Diese Ausgestaltung ist vor allem für lichtstarke Flächenkameras und/oder für kleinere Gegenstände von Vorteil. Größere Teile der Oberfläche können hier in einem Abbild aufgenommen werden. Ein zeilenweises Abtasten des Gegenstandes erübrigt sich.

Erfindungsgemäß wird der Gegenstand mit der Oberfläche in einem Innenraum mit Innenwänden verschoben, die den Gegenstand von zumindest drei Seiten umschließen, wobei sich das Muster über die umschließenden Innenwände erstreckt. Das Muster ist zumindest während der Aufnahme der ersten und weiteren Abbilder) stationär an den Innenwänden angeordnet. Alternativ hierzu kann das Streifenmuster von außen oder von innen auf die Innenwände projiziert werden oder mit Hilfe von Lichtelementen an den Innenwänden erzeugt werden.

Diese Ausgestaltung ermöglicht eine sehr kostengünstige und robuste Realisierung der neuen Vorrichtung und des neuen Verfahrens. Darüber hinaus wird mit dem Innenraum erreicht, dass die Bildaufnahmen weitgehend unabhängig von der Ausrichtung der zu inspizierenden Oberfläche sind. Insbesondere ist aufgrund dieser Ausgestaltung eine effiziente Inspektion von dreidimensionalen Gegenständen möglich, deren Oberflächen in unterschiedliche, im Vorhinein nicht genau bekannte Raumrichtungen zeigen.

Erfindungsgemäß laufen die Streifen spiralartig (helixartig) an den Innenwänden entlang. Vorzugsweise besitzen die Streifen dabei eine Steigung von etwa 45°. Bei zwei verschiedenen, vorzugsweise spektral codierten Streifenmustern betragen die Steigungen vorzugsweise +45° und -45° bzw. 1/-1 im mathematischen Sinne.

Eine spiralartige Anordnung der Streifenmuster ist eine sehr raumsparende Realisierung, die eine sehr zuverlässige Oberflächeninspektion für eine Vielzahl von Anwendungsfällen ermöglicht.

In einer weiteren bevorzugten Ausgestaltung besitzt der (vorzugsweise tunnelartige) Innenraum einen Querschnitt und parallel zum Querschnitt sind eine Vielzahl von Bildaufnahmeeinheiten verteilt, um den Gegenstand mit der Oberfläche von zumindest drei Seiten (vorzugsweise vollständig) aufzunehmen.

In dieser Ausgestaltung sind zumindest zwei Bildaufnahmeeinheiten in der Querschnittsfläche des Innenraums angeordnet. Vorzugsweise sind die Blickrichtungen der zumindest zwei Bildaufnahmeeinheiten zur Mitte des Tunnelquerschnitts ausgerichtet. Diese Ausgestaltung ermöglicht auf einfache und kostengünstige Weise eine sehr schnelle und effiziente Inspektion von Oberflächen an beliebig geformten, dreidimensionalen Gegenständen.

In einer weiteren bevorzugten Ausgestaltung besitzt der Innenraum eine Längsachse und der Gegenstand wird parallel zu der Längsachse verschoben.

In dieser Ausgestaltung wird der Gegenstand mit einer Translationsbewegung relativ zu dem Helligkeitsverlauf des oder der Muster bewegt. Alternativ wäre prinzipiell auch eine Drehbewegung möglich, wobei der tunnelartige Innenraum dann ggf. zu einem kuppelartigen Innenraum entarten kann. Eine Translationsbewegung besitzt den Vorteil, dass die Gegenstände mit der zu inspizierenden Oberfläche "beliebig" lang sein können, wohingegen die Längsabmessungen der Gegenstände bei einer Drehbewegung begrenzt sind. Darüber hinaus lässt sich eine Translationsbewegung sehr gut in die Produktionsabläufe von modernen Fertigungsprozessen integrieren.

Erfindungsgemäß beinhaltet das Muster zumindest ein erstes Streifenmuster mit ersten Streifen und ein zweites Streifenmuster mit zweiten Streifen, wobei die ersten und zweiten Streifen unterschiedlich ausgebildet sind.

Diese Ausgestaltung ermöglicht eine sehr variable, individuelle und vor allem schnelle Inspektion von unterschiedlichen Oberflächen in einem oder in aufeinanderfolgenden Durchgängen.

Erfindungsgemäß sind die ersten und zweiten Streifen quer zueinander angeordnet sind. Vorzugsweise verlaufen die ersten und zweiten Streifen orthogonal zu einander. Des weiteren ist es bevorzugt, wenn die Streifen weitgehend quer zur Bewegungsrichtung des Gegenstandes mit der zu inspizierenden Oberfläche verlaufen.

Diese Ausgestaltung ermöglicht eine sehr einfache, schnelle und zuverlässige Inspektion einer unbekannten Oberfläche, weil Oberflächendefekte in der Regel nur quer zur Verlaufsrichtung der Streifen detektierbar sind. Durch die Verwendung von zumindest zwei Streifenmustern mit quer zueinander angeordneten Streifen wird gewährleistet, dass ein Oberflächendefekt zumindest mit Hilfe eines der beiden Streifenmuster erkannt werden kann.

In einer besonders bevorzugten Ausgestaltung sind die ersten und die zweiten Streifen spektral unterschiedlich ausgebildet.

In dieser Ausgestaltung, die auch für sich genommen eine Erfindung im Zusammenhang mit deflektometrischen Auswerteverfahren darstellt, unterscheiden sich die zumindest zwei Streifenmuster hinsichtlich der Wellenlängen, die von den Streifen "abgegeben" werden. Beispielsweise können die ersten und zweiten Streifenmuster in unterschiedlichen Farben ausgeführt sein. Die unterschiedlichen Farben führen zu einer spektralen Codierung, mit deren Hilfe sich die verschiedenen Streifenmuster bei der Auswertung voneinander unterscheiden lassen. In besonders bevorzugten Ausgestaltungen sind die Bildaufnahmeeinheiten dazu ausgebildet, die spektral unterschiedlichen Streifenmuster voneinander zu unterscheiden, beispielsweise durch geeignete Farbfilter. Die Streifenmuster und Bildaufnahmeeinheiten können jedoch auch für unterschiedliche Wellenlängen im IR- oder UV-Bereich ausgebildet sein. Diese Ausgestaltung ermöglicht eine sehr effiziente Inspektion von großen Oberflächen und sie trägt dazu bei, den für die Vorrichtung benötigten Platzbedarf zu minimieren.

In weiteren bevorzugten Ausgestaltungen besitzen die zumindest zwei Streifenmuster dieselbe Periode und/oder dieselbe Streifenbreite. Alternativ hierzu können die Periode und/oder Streifenbreite variieren. Die zuletzt genannte Ausgestaltung besitzt den Vorteil, dass in Abhängigkeit von der Krümmung der zu inspizierenden Oberfläche eine optimal geeignete Streifenbreite und/oder Streifendichte ausgewählt werden kann, wodurch die Zuverlässigkeit bei der Detektion von Oberflächendefekten weiter gesteigert werden kann. Die zuerst genannte Ausgestaltung besitzt dem gegenüber den Vorteil, dass sie eine einfachere und damit kostengünstigere Realisierung ermöglicht.

In einer weiteren bevorzugten, Ausgestaltung wird anhand der Abbilder eine Vielzahl von lokalen Oberflächenneigungen bestimmt und anhand der lokalen Oberflächenneigungen wird ein Ausgangssignal erzeugt, das für die Eigenschaften der Oberfläche repräsentativ ist. Vorzugsweise werden die lokalen Oberflächenneigungen mit einem deflektometrischen Auswerteverfahren bestimmt.

Diese Ausgestaltung ermöglicht eine sehr zuverlässige und genaue Detektion von unterschiedlichen Oberflächendefekten. Sie ist daher besonders vorteilhaft zur Inspektion von Lackflächen und anderen spiegelnden Oberflächen, an die hohe Anforderungen gestellt werden.

In einer weiteren bevorzugten Ausgestaltung besitzt der Gegenstand ein vorderes und ein hinteres Ende, wobei eine erste Anzahl von Bildaufnahmeeinheiten an dem vorderen Ende angeordnet ist, und wobei eine zweite Anzahl von Bildaufnahmeeinheiten an dem hinteren Ende angeordnet ist. Vorzugsweise sind die Blickrichtungen der Bildaufnahmeeinheiten jeweils schräg in den Innenraum gerichtet.

Auch diese Ausgestaltung ist sehr vorteilhaft, um die Oberfläche von großen dreidimensionalen Gegenständen sehr schnell und effizient zu inspizieren.

In einer weiteren bevorzugten, Ausgestaltung ist die Periode ein ganzzahliges Vielfaches des definierten Abstandes, wobei das ganzzahlige Vielfache vorzugsweise gleich der Anzahl der im definierten Abstand zueinander gestaffelten Bildaufnahmeeinheiten ist.

Wenn in einer besonders bevorzugten Ausgestaltung vier hintereinander gestaffelte Bildaufnahmeeinheiten verwendet werden, ist die Periode des Helligkeitsverlaufs hier also das Vierfache des definierten Abstandes. Diese Ausgestaltung ermöglicht eine sehr schnelle und einfache Phasenrekonstruktion nach der sogenannten 4-Bucket-Methode, die beispielsweise in der eingangs genannten Publikation von Kammel beschrieben ist.

### Bevorzugte.

Ausführungsbeispiele der Erfindung sind in der Zeichnung dargestellt und werden in der nachfolgenden Beschreibung näher erläutert. Es zeigen:
- Fig. 1: eine vereinfachte Darstellung eines bevorzugten Ausführungsbeispiels der neuen Vor- richtung mit einem Inspektionstunnel zum Inspizieren von Lackoberflä- chen bei Kraftfahrzeugen,
- Fig. 2: den Inspektionstunnel aus Fig. 1 in einem Querschnitt von vorne,
- Fig. 3: eine schematische Darstellung zur Erläuterung des neuen Verfahrens,
- Fig. 4: ein vereinfachtes Flussdiagramm zur Erläuterung eines bevorzugten, Ausführungsbei- spiels des neuen Verfahrens, und
- Fig. 5: ein weiteres bevorzugtes Ausführungsbeispiel der neuen Vorrichtung.

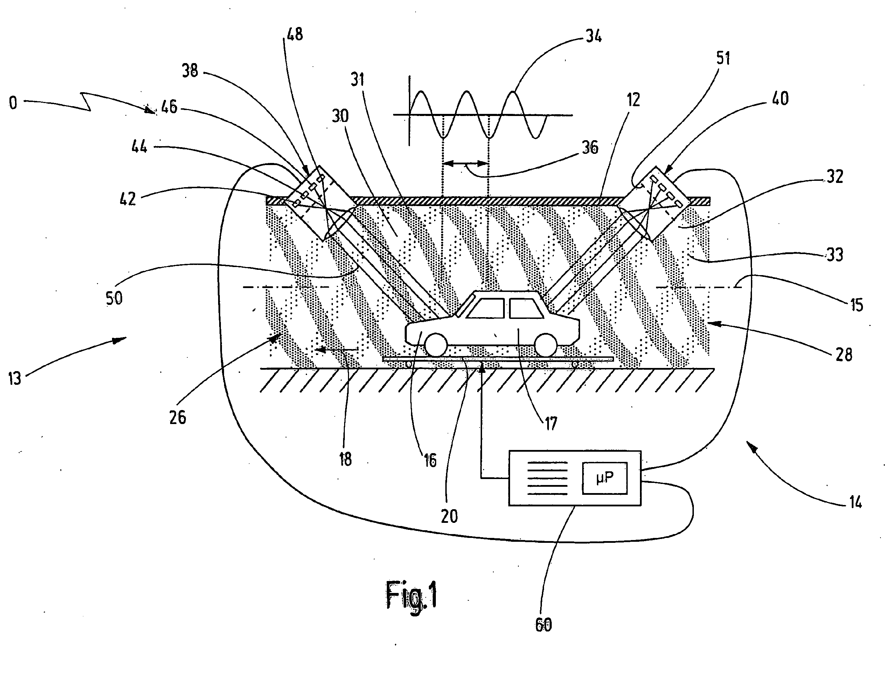

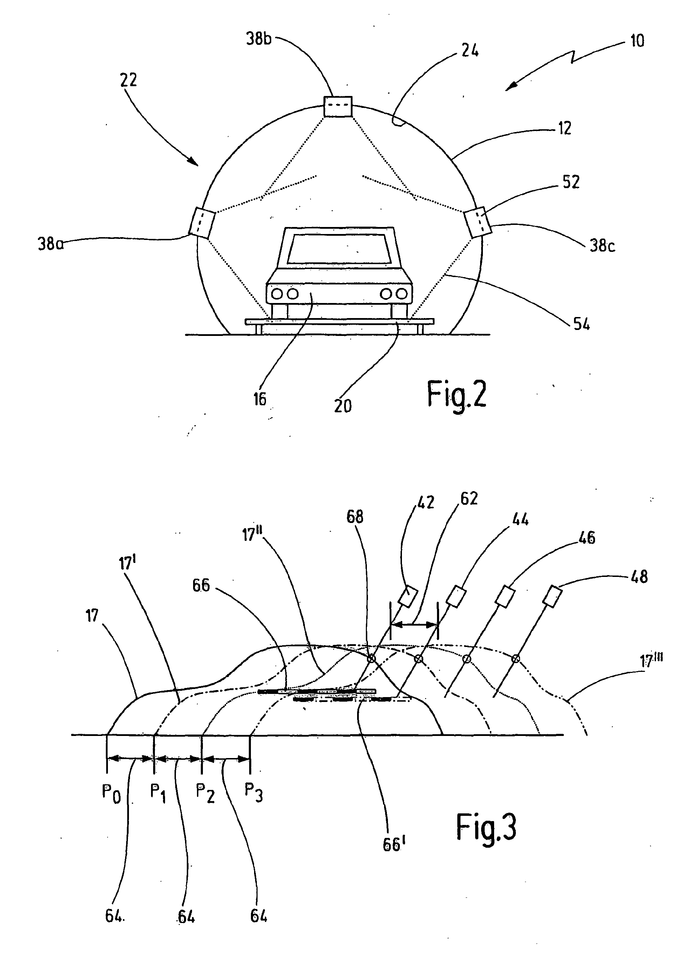

In Fig. 1 und 2 ist ein bevorzugten Ausführungsbeispiel der neuen Vorrichtung in seiner Gesamtheit mit der Bezugsziffer 10 bezeichnet.

Die Vorrichtung 10 beinhaltet einen Tunnel 12 mit einem vorderen Ende 13 und einem hinteren Ende 14. Der Tunnel 12 besitzt eine Längsachse 15, parallel zu der hier ein Auto 16 mit einer zu inspizierenden Lackoberfläche 17 in Richtung des Pfeils 18 bewegt werden kann. Das Auto 16 ist hier auf einem Transportwagen 20 angeordnet, der beispielsweise mit Hilfe eines elektrischen Antriebes (nicht dargestellt) durch den Tunnel 12 gezogen wird. Alternativ kann das Auto 16 auch auf einem Förderband angeordnet sein, oder das Auto 16 kann ohne Transportwagen 20 durch den Tunnel gezogen oder gefahren werden. In jedem Fall bildet der Tunnelboden, ggf. zusammen mit dem Transportwagen oder dem Förderband eine Aufnahme für den zu inspizierenden Gegenstand.

Wie man in Fig. 2 erkennen kann, besitzt der Tunnel 12 in dem dargestellten Ausführungsbeispiel einen annähernd kreisförmigen Querschnitt 22, der einen Kreiswinkel von etwa 270° abdeckt. Prinzipiell sind jedoch auch andere Tunnelquerschnitte möglich, beispielsweise in Form eines Polygons oder ein rechteckiger Tunnelquerschnitt. Ein kreisförmiger Tunnelquerschnitt oder ein anderer knickfreier Tunnelquerschnitt ist aus heutiger Sicht bevorzugt, weil die nachfolgend erläuterten Muster dann weitgehend stetig und ohne Stoßstellen realisiert werden können, was die Inspektion der Lackoberfläche vereinfacht. Der Tunnel 12 kann auch mit Hilfe von Spiegeln (hier nicht dargestellt) realisiert sein, mit denen sich der Abdeckungsgrad auf einfache Weise erhöhen lässt.

Wie in Fig. 2 zu erkennen ist, ist der Querschnittsradius des zu inspizierenden Gegenstandes, hier des Autos 16, vorzugsweise so gewählt, dass er zwischen 20% und 70% des Tunnelradius beträgt. Größere oder kleinere Gegenstände erschweren die Inspektion der Oberfläche, weil der Abstand zwischen Oberfläche, nachfolgend erläutertem Muster und Bildaufnahmeeinheit entweder zu groß oder zu klein ist. Ein zu großer Tunnel in Bezug auf die zu inspizierende Oberfläche wäre zudem unwirtschaftlich. Des weiteren ist es bevorzugt, wenn der Gegenstand in etwa im geometrischen Mittelpunkt des Tunnelquerschnitts transportiert wird.

Der Tunnel 12 besitzt eine Innenwand 24 (mehrere Innenwände bei polygonen Tunnelquerschnitten), an der hier zwei Streifenmuster 26, 28 angeordnet sind. Das Streifenmuster 26 besteht aus helleren Streifen 30 und dunkleren Streifen 31, die abwechselnd nebeneinander und parallel zueinander verlaufen. Das Streifenmuster 28 enthält hellere Streifen 32 und dunklere Streifen 33, die ebenfalls parallel zueinander und nebeneinander angeordnet sind. In dem dargestellten Ausführungsbeispiel sind die dunkleren Streifen 31, 33 spektral unterschiedlich ausgebildet, was in Fig. 1 anhand von unterschiedlichen "Punktdichten" dargestellt ist. Beispielsweise sind die dunkleren Streifen 31, 33 in verschiedenen Farben realisiert, vorzugsweise in Blau und in Rot.

In einem Ausführungsbeispiel sind die Streifenmuster 26, 28 auf die Innenwand 24 des Tunnels 12 aufgemalt. In einem anderen Ausführungsbeispiel ist die Innenwand 24 des Tunnels 12 mit einer Folie beklebt, auf der die unterschiedlichen Streifen aufgedruckt sind. In einem weiteren Ausführungsbeispiel sind an der Innenwand 24 hinter einem semitransparenten Schirm eine Vielzahl von Leuchtdioden angeordnet, mit denen die hellen und dunklen Streifen erzeugt werden. In einem weiteren Ausführungsbeispiel handelt es sich um eine "Tapete" aus organischen Leuchtdioden. Vorteilhaft ist es, wenn die Leuchtdioden farblich umschaltbar sind und/oder an den Gegenstand anpassbar sind, beispielsweise in der Periode des Helligkeitsverlaufs. In noch einem weiteren Ausführungsbeispiel können die Streifenmuster auf die Innenwand des Tunnels 12 projiziert sein, und zwar entweder vom Innenraum 24 des Tunnels her oder durch eine Projektion von außen, wobei die Außenwand des Tunnels im zuletzt genannten Fall einen semitransparenten Schirm darstellt. In noch einem weiteren Ausführungsbeispiel sind die Tunnelwände aus einem teilweise transparenten Material, das mattierte Bereiche aufweist. Das transparente Material dient zur Lichtleitung über Totalreflexion. Die mattierten Bereiche leuchten in diesem Fall.

In allen bevorzugten Ausführungsbeispielen sind die Streifenmuster 26, 28 räumlich stationär bzw. stationär, was nicht ausschließt, dass die Muster prinzipiell verändert werden können. Im Gegensatz zu den bislang bekannten Verfahren mit Streifenmustern können die Streifenmuster jedoch während der Inspektion der Oberfläche 17 konstant gehalten werden, weil das Auto 16 durch den Tunnel 12 bewegt wird. "Stationär" bzw. "räumlich stationär" bezieht sich also auf die Realisierung der Muster 26, 28 während bzw. für die Inspektion einer bestimmten Oberfläche und noch genauer auf die Realisierung der Muster in Bezug auf die Positionen und Zeitpunkte, an denen das erste und die weiteren Abbilder aufgenommen werden. In einem hier nicht dargestellten Ausführungsbeispiel ist vorgesehen, verschiedene Muster 26, 28 mit unterschiedlich breiten Streifen 30, 31, 32, 33 bereitzustellen und/oder mit Hilfe von Leuchtdioden zu erzeugen, wobei auch in diesem Fall die Bildaufnahme so erfolgt, dass Abbilder mit jeweils "gleichen" und insofern räumlich stationären Mustern verglichen werden.

Jedes Muster 26, 28 bildet einen Helligkeitsverlauf 34, der im dargestellten Ausführungsbeispiel sinusförmig ist. Prinzipiell sind jedoch auch andere Helligkeitsverläufe möglich wie z.B Sägezahn oder Dreicksverlauf. Gemeinsam ist allen Helligkeitsverläufen, dass sie eine definierte Periode besitzen, die in Fig. 1 bei der Bezugsziffer 36 dargestellt ist. Prinzipiell genügt ein Periodendurchlauf.

Mit den Bezugsziffern 38 und 40 sind zwei Kameraköpfe bezeichnet, wobei der Kamerakopf 38 am vorderen Ende 13 des Tunnels 12 angeordnet ist, während der Kamerakopf 40 am hinteren Ende 14 angeordnet ist. Jeder Kamerakopf 38, 40 besitzt hier vier Bildaufnahmeeinheiten 42, 44, 46, 48, die mit einem definierten Abstand zueinander gestaffelt sind (siehe Fig. 3 und nachfolgende Erläuterungen). Die Blickrichtungen 50 der Bildaufnahmeeinheiten 42, 44, 46, 48 verlaufen parallel zueinander, wie dies in Fig. 1 schematisch dargestellt ist. In diesem Ausführungsbeispiel besitzt jeder Kamerakopf 38, 40 ein variables Farbfilter 51, mit dessen Hilfe wahlweise das eine oder das andere Streifenmuster 26, 28 für die Bildaufnahme selektiert werden kann.

Wie in Fig. 2 zu erkennen ist, besitzt die Vorrichtung 10 hier jeweils drei Kameraköpfe 38a, 38b, 38c am vorderen Ende 13 des Tunnels sowie drei entsprechende Kameraköpfe 40a, 40b, 40c am hinteren Ende 14 (nicht dargestellt). Die drei Kameraköpfe 38, 38, 38 sind entlang der Querschnittsfläche des Tunnels 12 so verteilt, dass sie das Auto 16 aus drei unterschiedlichen Richtungen und damit weitgehend vollständig aufnehmen können. Jede Bildaufnahmeeinheit 42, 44, 46, 48 ist hier als Zeilenkamera realisiert, d.h. die Bildaufnahmeeinheiten, 42, 44, 46, 48 besitzen jeweils einen Bildsensor mit einer linienförmigen Anordnung 52 von Bildpunkten (Fig. 2). Innerhalb jedes Kamerakopfes 38 sind die Zeilensensoren so hintereinander gestaffelt, dass sich die in Fig. 1 schematisch dargestellten Blickrichtungen 50 mit den definierten Abständen sowie die in Fig. 2 schematisch dargestellten Sehfächer 54 ergeben. Zur Erhöhung der Lichtstärke werden hier bevorzugt so genannte TDI-Zeilensensoren eingesetzt.

Alternativ können die Bildaufnahmeeinheiten 42 bis 48 hier aber auch als Flächenkameras realisiert sein. In einem Ausführungsbeispiel ist jede Bildaufnahmeeinheit 42 bis 48 eine Flächenkamera mit einer matrixartigen Anordnung von Bildpunkten (nicht dargestellt), wobei von dieser matrixartigen Anordnung jeweils nur einzelne Zeilen oder Spalten ausgelesen werden, so dass die matrixartige Anordnung mit einer gestaffelten Anordnung von Zeilensensoren vergleichbar ist. In einem anderen Ausführungsbeispiel werden die matrixartigen Anordnungen der Bildpunkte weitgehend flächig ausgelesen, um auf diese Weise einen größeren Ausschnitt auf der Oberfläche 17 des Autos 16 zu erfassen. Vorzugsweise werden Abweichungen der Vorschubbewegung von der idealen Vorschubbewegung anhand der Kamerabilder rechnerisch kompensiert. Zu diesem Zweck ist es vorteilhaft, wenn an dem Transportwagen 20 Markierungen angeordnet sind, mit deren Hilfe Abweichungen von der idealen Vorschubbewegung detektiert werden können.

Mit der Bezugsziffer 60 ist in Fig. 1 eine Auswerte- und Steuereinheit bezeichnet, die einerseits dazu ausgebildet ist, die Vorschubbewegung 18 des Autos 16 zu steuern. In bevorzugten Ausführungsbeispielen wird das Auto 16 kontinuierlich durch den Tunnel 12 bewegt. In anderen Ausführungsbeispielen erfolgt der Vorschub schrittweise, wobei nach jeweils einem Vorschubschritt eine Bildaufnahme mit den Bildaufnahmeeinheiten 42 bis 48 erfolgt.

Fig. 3 zeigt anhand einer Prinzipskizze einen Aspekt des neuen Verfahrens und der neuen Vorrichtung. Gleiche Bezugszeichen bezeichnen hier dieselben Elemente wie zuvor.

Fig. 3 zeigt die Oberfläche 17 an insgesamt vier verschiedenen Positionen P₀, P₁, P₂, P₃. Außerdem sind die vier Bildaufnahmeeinheiten 42 bis 48 eines der Kameraköpfe 38, 40 dargestellt. Mit der Bezugsziffer 62 ist der relative Abstand von einer Bildaufnahmeeinheit 42 zur nächsten Bildaufnahmeeinheit 44 bezeichnet, wobei der Abstand parallel zur Vorschubrichtung 18 der Oberfläche 17 bemessen ist. Mit der Bezugsziffer 64 sind die Distanzen bezeichnet, über die die Oberfläche 17 von einer Position P₀ zur nächsten Position P₁ usw. verschoben wird. Mit der Bezugsziffer 66 ist hier ein Musterbild 66 bezeichnet, d.h. ein Abbild des Streifenmusters 26 oder 28, das von der Oberfläche 17 reflektiert wird oder anderweitig auf der Oberfläche 17 detektiert werden kann. Bezugsziffer 66' zeigt das Musterbild 66 auf der Oberfläche 17' nach einem Vorschub um die Distanz 64.

Wie in Fig. 3 zu erkennen ist, wird mit der Bildaufnahmeeinheit 42 an der Position P₀ ein Oberflächenpunkt 68 an der Oberfläche 17 aufgenommen. Es sei angenommen, dass zum Zeitpunkt der Bildaufnahme ein dunkler Streifenbereich auf den Oberflächenpunkt 68 fällt, was in Fig. 3 anhand der Blickrichtung der Bildaufnahmeeinheit 42 in Bezug auf das Musterbild 66 dargestellt ist.

Aufgrund der gewählten Abstände 62 und Distanzen 64 wird derselbe Oberflächenpunkt 68 nach einem Vorschubschritt mit der Bildaufnahmeeinheit 44 aufgenommen. Allerdings fällt zu diesem Zeitpunkt ein anderer Teil des Musters 26 auf den Oberflächenpunkt 68, was bei der Bezugsziffer 66' dargestellt ist. Ursache für die Veränderung des Musterbildes ist die relative Bewegung der Oberfläche 17 in Bezug auf das Muster 26.

Wie anhand der Darstellung in Fig. 3 leicht nachzuvollziehen ist, wird derselbe Oberflächenpunkt 68 anschließend auch mit den weiteren Bildaufnahmeeinheiten 46, 68 aufgenommen, wobei sich jeweils das Musterbild 66 am Oberflächenpunkt 68 verändert hat, weil die Oberfläche 17 in Richtung des Pfeils 18 verschoben wurde. Im Ergebnis erhält man jedoch von den vier Bildaufnahmeeinheiten 42, 44, 46, 48 vier Abbilder des Oberflächenpunktes 68. Diese vier Abbilder werden vorteilhafterweise nach der 4-Bucket-Methode ausgewertet, um die lokale Oberflächenneigung an dem Oberflächenpunkt 68 zu bestimmen. Anhand der Oberflächenneigung lassen sich dann Oberflächendefekte unterschiedlicher Art erkennen.

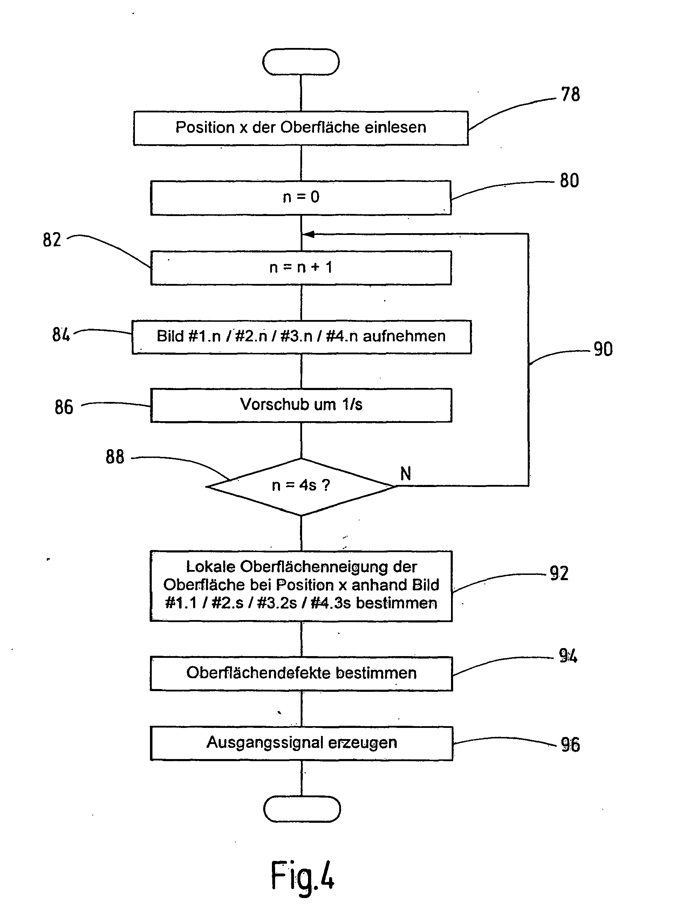

Ein bevorzugtes Verfahren dieser Art ist in Fig. 4 vereinfacht dargestellt. In Schritt 78 wird zunächst die Anfangsposition x der Oberfläche entlang der Vorschubrichtung 18 eingelesen. Dies kann in bekannter Weise mit Hilfe von Positionsgebern erfolgen, die entlang der Tunnelachse 15 angeordnet sind. Anschließend wird im Schritt 80 eine Zählvariable n auf Null gesetzt. Im nächsten Schritt 82 wird der Zähler n um 1 inkrementiert. Anschließend werden im Schritt 84 Bilder #1.n /#2.n /#3.n /4.n mit den vier Bildaufnahmeeinheiten 42 bis 48 aufgenommen. Bild #1.n bezeichnet hier das Bild, das mit der ersten Bildaufnahmeeinheit im Iterationsschritt n aufgenommen wurde.

Im nächsten Schritt 86 wird die Oberfläche um die definierte Distanz 64 vorgeschoben (Position P₁ in Fig. 3). Anschließend erfolgt im Schritt 88 eine Abfrage, ob bereits genügend Iterationsschritte durchgeführt wurden. Im vorliegenden Ausführungsbeispiel wird geprüft, ob der Iterationszähler n = 4 · s ist, wobei s im einfachsten Fall gleich 1 ist. Wenn die Überprüfung in Schritt 88 ergibt, dass noch nicht genügend Iterationsschritte durchlaufen wurden, verzweigt das Verfahren gemäß Schleife 90 wieder zum Schritt 82 und es werden weitere Bilder mit den vier Kameras aufgenommen und die Oberfläche wird um eine weitere Distanz vorgeschoben.

Nachdem alle Schleifendurchläufe 90 absolviert sind (im einfachsten Fall vier Schleifendurchläufe in diesem Ausführungsbeispiel), stehen genügend Bilder #1.1, #2.2, #3.3, #4.4 zur Verfügung, um die lokale Oberflächenneigung an den Oberflächenpunkten 68 nach der 4-Bucket-Methode zu bestimmen. Dies erfolgt im Schritt 92.

Anschließend werden gemäß Schritt 94 Oberflächendefekte in Abhängigkeit von den lokalen Oberflächenneigungen bestimmt, indem bspw. ein Schwellwertkriterium angewandt wird. Gemäß Schritt 96 wird anschließend ein Ausgangssignal erzeugt, das bspw. bei einem erkannten Oberflächendefekt dafür sorgt, dass der als defekt erkannte Oberflächenpunkt markiert oder in anderer Weise gespeichert wird.

Im vorhergehenden Ausführungsbeispiel wurde angenommen, dass die Vorschubdistanz 64 gleich dem relativen Abstand 62 der Bildaufnahmeeinheiten ist. In Fällen, in denen die "Sprünge" an der Oberfläche 17 bei solchen Distanzen zu groß sind, können kleinere Vorschübe durchgeführt werden, d.h. die Vorschubdistanz 64 wird in kleinere Intervalle (nicht dargestellt) unterteilt. In diesem Fall wird das Verfahren gemäß Fig. 4 durchlaufen, indem die Variable s die Anzahl der Teilintervalle innerhalb der Distanz 64 angibt. Es müssen dementsprechend mehr Iterationsschritte durchlaufen werden, bis der Oberflächenpunkt 68 von allen vier Bildaufnahmeeinheiten 42 bis 48 aufgenommen wurde. Wenn die Vorschubdistanz 64 bspw. in drei Teilintervalle unterteilt wird, liegen die Abbilder aller vier Bildaufnahmeeinheiten 42 bis 48 für den einen Oberflächenpunkt 68 erst nach zwölf Vorschüben vor.

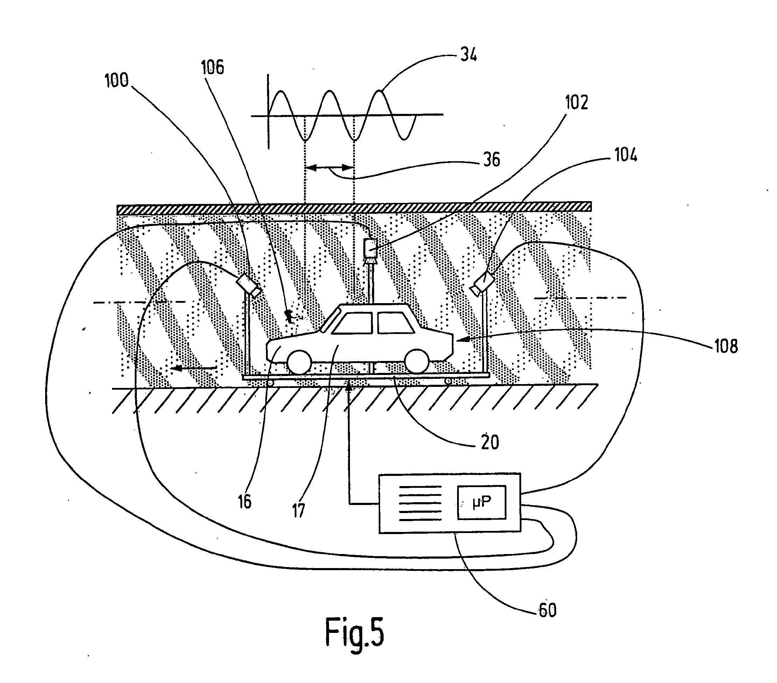

Fig. 5 zeigt ein weiteres Ausführungsbeispiel für die neue Vorrichtung und das neue Verfahren. Gleiche Bezugsziffern bezeichnen dieselben Elemente wie zuvor. Bei diesem Ausführungsbeispiel sind mehrere Bildaufnahmeeinheiten 100, 102, 104 an Haltern angeordnet, die fest mit dem Transportwagen 20 gekoppelt sind. Dies hat zur Folge, dass die Bildaufnahmeeinheiten 100, 102, 104 zusammen mit dem Auto 16 durch den Tunnel 12 vorgeschoben werden. Die relative Lage der Bildaufnahmeeinheiten 100, 102, 104 zu dem Auto 16 verändert sich hier also nicht. Gleichwohl nehmen die Bildaufnahmeeinheiten 100, 102, 104 die Oberfläche 17 mit wechselnden Reflexionen des Helligkeitsverlaufs 34 auf. Die Auswerteeinheit 60 kann dementsprechend Oberflächendefekte anhand der verschiedenen Abbilder erkennen.

In diesem Ausführungsbeispiel sind die Bildaufnahmeeinheiten 100, 102, 104 vorteilhafterweise Flächenkameras, die so angeordnet sind, dass alle interessierenden Bereiche der Oberfläche 17 erfasst werden. Es versteht sich, dass dazu gegebenenfalls mehr als nur die drei dargestellten Bildaufnahmeeinheiten 100, 102, 104 benötigt werden. Vorteilhafterweise ist zumindest eine Bildaufnahmeeinheit 100 am vorderen Ende 106 des Autos angeordnet und eine weitere Bildaufnahmeeinheit 104 ist am hinteren Ende 108 des Autos angeordnet.

In einem hier nicht dargestellten Ausführungsbeispiel besitzt der Tunnel 12 am vorderen und hinteren Ende 13, 14 jeweils Türen oder Klappen, um das Eindringen von Fremdlicht während der Inspektion der Oberfläche vollständig zu unterbinden. In einem weiteren Ausführungsbeispiel ist der Tunnel 12 wesentlich kleiner, um bspw. einzelne Karosserieteile, wie etwa eine lackierte Stoßstange, einen Kolben, eine Glasscheibe o.ä. zu inspizieren. Darüber hinaus sei darauf hingewiesen, dass das neue Verfahren und die neue Vorrichtung nicht nur zur Oberflächeninspektion bei Kraftfahrzeugteilen oder Kraftfahrzeugen eingesetzt werden können, sondern auch zur Oberflächeninspektion bei anderen Gegenständen, insbesondere bei technischen Oberflächen, wie etwa feinbearbeiteten Metalloberflächen. Generell ist es bevorzugt, wenn die jeweils zu inspizierenden Oberflächen im Tiefenschärfebereich der Bildaufnahmeeinheiten liegen, was bei der Dimensionierung der Vorrichtung berücksichtigt werden muss. In einige bevorzugten Ausführungsbeispielen sind die Bildaufnahmeeinheiten mit ihrem Tiefenschärfebereich auf die zu inspizierende Oberfläche ausgerichtet, nicht auf das Muster.

Prinzipiell kann zusätzlich zu der Inspektion der Oberfläche eine Rekonstruktion der globalen Topographie der Oberfläche erfolgen, indem bspw. über die lokalen Oberflächenneigungen integriert wird. Damit erhält man eine Formbestimmung in Ergänzung zu der Inspektion der Oberfläche.

## Patentansprüche

1. Verfahren zum optischen Inspizieren einer Oberfläche (17) an einem Gegenstand (16), insbesondere zum Inspizieren einer reflektierenden Oberfläche an einem Kraftfahrzeug, mit den Schritten:
- Bereitstellen eines Musters (26, 28) mit einer Anzahl von helleren (30, 32) und dunkleren Streifen (31, 33), die einen sich zumindest weitgehend kontinuierlich ändernden Helligkeitsverlauf (34) mit einer definierten Periode (36) bilden, wobei das Muster zumindest ein erstes Streifenmuster (26) mit ersten Streifen (30, 31) und ein zweites Streifenmuster (28) mit zweiten Streifen (32, 33) beinhaltet, wobei die ersten und zweiten Streifen (30, 31, 32, 33) unterschiedlich ausgebildet sind,
- Positionieren des Gegenstandes (16) mit der Oberfläche (17) relativ zu dem Muster (26, 28) derart, dass der Helligkeitsverlauf (34) auf die Oberfläche (17) fällt,
- Aufnehmen eines ersten Abbildes (66) von der Oberfläche (17) einschließlich des darauf fallenden Helligkeitsverlaufs (34) mit Hilfe einer Bildaufnahmeeinheit (42; 100, 102, 104), die an einer ersten Position angeordnet ist,
- Verschieben des Helligkeitsverlaufs (34) relativ zu der Oberfläche (17) und Aufnehmen von zumindest einem weiteren Abbild (66') von der Oberfläche (17) mit dem verschobenen Helligkeitsverlauf (34), und
- Bestimmen von Eigenschaften der Oberfläche (17) in Abhängigkeit von den Abbildern (66, 66'),
wobei der Helligkeitsverlauf (34) räumlich stationär gehalten wird, wobei der Gegenstand (16) mit der Oberfläche (17) um eine definierte Distanz (64) relativ zu dem räumlich stationären Helligkeitsverlauf (34) verschoben wird, wobei das zumindest eine weitere Abbild (66') mit einer Bildaufnahmeeinheit (44, 46, 48; 100, 102, 104) aufgenommen wird, die an einer zweiten Position angeordnet ist, und wobei die erste und die zweite Position in einem definierten Abstand (62) zueinander liegen, der gleich der definierten Distanz (64) ist, **dadurch gekennzeichnet, dass** der Gegenstand (16) in einem Innenraum (12) mit Innenwänden (24) verschoben wird, die den Gegenstand (16) von zumindest drei Seiten umschließen, wobei sich das Muster (26, 28) über die umschließenden Innenwände (24) erstreckt, wobei die Streifen (30-33) spiralartig an den Innenwänden (24) entlang laufen, und wobei die ersten und zweiten Streifen (30, 31, 32, 33) quer zueinander angeordnet sind.

2. Verfahren nach Anspruch 1, **dadurch gekennzeichnet, dass** das weitere Abbild (66') zumindest ein zweites und ein drittes Abbild beinhaltet, wobei der Gegenstand (16) mit der Oberfläche (17) zwischen dem zweiten und dem dritten Abbild erneut um die definierte Distanz (64) verschoben wird, und wobei das zweite und das dritte Abbild im gleichen definierten Abstand (62) zueinander aufgenommen werden, wie das erste und das zweite Abbild (66, 66').

3. Verfahren nach Anspruch 1 oder 2, **dadurch gekennzeichnet, dass** das erste Abbild (66) mit einer ersten Bildaufnahmeeinheit (42) aufgenommen wird und dass das zumindest eine weitere Abbild (66') mit zumindest einer weiteren Bildaufnahmeeinheit (44, 46, 48) aufgenommen wird, wobei die erste (42) und die zumindest eine weitere Bildaufnahmeeinheit (44, 46, 48) in dem definierten Abstand (62) zueinander angeordnet sind.

4. Verfahren nach Anspruch 3, **dadurch gekennzeichnet, dass** die erste und die zumindest eine weitere Bildaufnahmeeinheit (42-48) Zeilenkameras sind, die jeweils eine linienförmige Anordnung (52) von Bildpunkten besitzen.

5. Verfahren nach Anspruch 3 oder 4, **dadurch gekennzeichnet, dass** die erste und die zumindest eine weitere Bildaufnahmeeinheit (42-48) jeweils eine Blickrichtung (50) besitzen, wobei die Blickrichtungen (50) weitgehend parallel zueinander sind.

6. Verfahren nach einem der Ansprüche 3 bis 5, **dadurch gekennzeichnet, dass** die erste Bildaufnahmeeinheit (42) und die zumindest eine weitere Bildaufnahmeeinheit (44-48) einen integrierten Kamerakopf (38, 40) bilden.

7. Verfahren nach einem der Ansprüche 3 bis 6, **dadurch gekennzeichnet, dass** die Bildaufnahmeeinheiten (42-48; 100-104) Flächenkameras sind, die jeweils eine matrixartige Anordnung von Bildpunkten besitzen.

8. Verfahren nach Anspruch 1 oder 2, **dadurch gekennzeichnet, dass** das erste Abbild (66) und das zumindest eine weitere Abbild (66') mit einer Bildaufnahmeeinheit (100, 102, 104) aufgenommen werden, die zusammen mit dem Gegenstand (16) verschoben wird.

9. Verfahren nach einem der Ansprüche 1 bis 8, **dadurch gekennzeichnet, dass** der Innenraum (12) einen Querschnitt (22) besitzt und dass parallel zum Querschnitt (22) eine Vielzahl Bildaufnahmeeinheiten (38a, 38b, 38c) verteilt sind, um den Gegenstand (16) mit der Oberfläche (17) von zumindest drei Seiten aufzunehmen.

10. Verfahren nach einem der Ansprüche 1 bis 9, **dadurch gekennzeichnet, dass** der Innenraum (12) eine Längsachse (15) besitzt und dass der Gegenstand (16) parallel zu der Längsachse (15) verschoben wird.

11. Verfahren nach einem der Ansprüche 1 bis 10, **dadurch gekennzeichnet, dass** die ersten und die zweiten Streifen (30, 31, 32, 33) spektral unterschiedlich ausgebildet sind.

12. Verfahren nach einem der Ansprüche 1 bis 11, **dadurch gekennzeichnet, dass** die zumindest zwei Streifenmuster (26, 28) dieselbe Periode (36) und/oder dieselbe Streifenbreite besitzen.

13. Verfahren nach einem der Ansprüche 1 bis 12, **dadurch gekennzeichnet, dass** die zumindest zwei Streifenmuster verschiedene Perioden (36) und/oder Streifenbreiten besitzen.

14. Verfahren nach einem der Ansprüche 1 bis 13, **dadurch gekennzeichnet, dass** anhand der Abbilder (66,66') eine Vielzahl von lokalen Oberflächenneigungen (92) bestimmt wird, und dass anhand der lokalen Oberflächenneigungen ein Ausgangssignal (96) erzeugt wird, das für die Eigenschaften der Oberfläche (17) repräsentativ ist.

15. Vorrichtung zum optischen Inspizieren einer Oberfläche (17) an einem Gegenstand (16), insbesondere zum Inspizieren einer reflektierenden Oberfläche an einem Kraftfahrzeug, mit:
- einem Muster (26, 28) mit einer Anzahl von helleren und dunkleren Streifen (30-33), die einen sich zumindest weitgehend kontinuierlich ändernden Helligkeitsverlauf (34) mit einer definierten Periode (36) bilden, wobei das Muster zumindest ein erstes Streifenmuster (26) mit ersten Streifen (30, 31) und ein zweites Streifenmuster (28) mit zweiten Streifen (32, 33) beinhaltet, wobei die ersten und zweiten Streifen (30, 31, 32, 33) unterschiedlich ausgebildet sind,
- einer Aufnahme (20) zum Positionieren des Gegenstandes (16) mit der Oberfläche (17) relativ zu dem Muster (26, 28) derart, dass der Helligkeitsverlauf (34) auf die Oberfläche (17) fällt,
- zumindest einer Bildaufnahmeeinheit (42; 100, 102, 104), die an einer ersten Position angeordnet ist, zum Aufnehmen von einem ersten Abbild (66) von der Oberfläche (17) einschließlich des darauf fallenden Helligkeitsverlaufs (34),
- einer Steuereinheit (60), die dazu ausgebildet ist, das Aufnehmen von dem ersten Abbild (66) und von zumindest einem weiteren Abbild (66') zu steuern, wobei das zumindest eine weitere Abbild (66') nach Verschieben des Helligkeitsverlaufs (34) relativ zu der Oberfläche (17) aufnehmbar ist, und
- einer Auswerteeinheit (60) zum Bestimmen von Eigenschaften der Oberfläche (17) in Abhängigkeit von den Abbildern,
wobei der Helligkeitsverlauf (34) räumlich stationär ist, wobei die Aufnahme (20) dazu ausgebildet ist, den Gegenstand (16) mit der Oberfläche (17) um eine definierte Distanz (64) relativ zu dem räumlich stationären Helligkeitsverlauf (34) zu verschieben, wobei die Steuereinheit (60) dazu ausgebildet ist, das zumindest eine weitere Abbild (66') mit einer Bildaufnahmeeinheit (44, 46, 48; 100, 102, 104) an einer zweiten Position aufzunehmen, wobei die erste und die zweite Position in einem definierten Abstand (64) zueinander liegen, und wobei der definierte Abstand (64) gleich der definierten Distanz (62) ist, **gekennzeichnet durch** einen Innenraum (12) mit Innenwänden (24), die den Gegenstand (16) von zumindest drei Seiten umschließen, wobei sich das Muster (26, 28) über die umschließenden Innenwände (24) erstreckt, wobei die Streifen (30-33) spiralartig an den Innenwänden (24) entlang laufen, und wobei die ersten und zweiten Streifen (30, 31, 32, 33) quer zueinander angeordnet sind.

## Claims

1. Method for the optimum inspection of a surface (17) on an object (16), in particular for inspection of a reflective surface on a motor vehicle, having the steps of:
- providing a pattern (26, 28) with a number of lighter (30, 32) and darker strips (31, 33) which form an at least largely continuously changing brightness profile (34) with a defined period (36), the pattern including at least a first strip pattern (26) with first strips (30, 31) and a second strip pattern (28) with second strips (32, 33), the first and second strips (30, 31, 32, 33) being of different design,
- positioning the object (16) with the surface (17) in relation to the pattern (26, 28) in such a way that the brightness profile (34) falls onto the surface (17),
- recording a first image (66) of the surface (17), including the brightness profile (34) falling thereon, with the aid of an image recording unit (42; 100, 102, 104) which is arranged at a first position,
- displacing the brightness profile (34) in relation to the surface (17), and recording at least one further image (66') of the surface (17) with the displaced brightness profile (34) and
- determining properties of the surface (17) as a function of the images (66, 66'),
the brightness profile (34) being held in a spatially stationary fashion, the object (16) with the surface (17) being displaced by a defined distance (64) in relation to the spatially stationary brightness profile (34), the at least one further image (66') being recorded with an image recording unit (44, 46, 48; 100, 102, 104) which is arranged at a second position, and the first and second positions being situated at a defined spacing (62) from one another which is equal to the defined distance (64), **characterized in that** the object (16) is displaced in an interior space (12) with inner walls (24) which enclose the object (16) from at least three sides, the pattern (26, 28) extending over the enclosing inner walls (24), the strips (30-33) running along the inner walls (24) in spiral fashion, and the first and second strips (30, 31, 32, 33) being arranged transverse to one another.

2. Method according to Claim 1, **characterized in that** the further image (66') includes at least a second and a third image, the object (16) with the surface (17) being displaced anew by the defined distance (64) between the second and the third images, and the second and the third images being recorded at the same defined spacing (62) from one another as the first and the second images (66, 66').

3. Method according to Claim 1 or 2, **characterized in that** the first image (66) is recorded with the aid of a first image recording unit (42), and **in that** the at least one further image (66') is recorded with the aid of at least one further image recording unit (44, 46, 48), the first (42) and the at least one further image recording units (44, 46, 48) being arranged at the defined spacing (62) from one another.

4. Method according to Claim 3, **characterized in that** the first and the at least one further image recording units (42-48) are line cameras which respectively have a linear arrangement (52) of pixels.

5. Method according to Claim 3 or 4, **characterized in that** the first and the at least one further image recording units (42-48) respectively have a viewing direction (50), the viewing directions (50) being largely parallel to one another.

6. Method according to one of Claims 3 to 5, **characterized in that** the first image recording unit (42) and the at least one further image recording unit (44-48) form an integrated camera head (38, 40).

7. Method according to one of Claims 3 to 6, **characterized in that** the image recording units (42-48; 100-104) are surface cameras which respectively have a matrix-type arrangement of pixels.

8. Method according to Claim 1 or 2, **characterized in that** the first image (66) and the at least one further image (66') are recorded with the aid of an image recording unit (100, 102, 104) which is displaced together with the object (16).

9. Method according to one of Claims 1 to 8, **characterized in that**, the interior space (12) has a cross section (22), and **in that** a multiplicity of image recording units (38a, 38b, 38c) is distributed parallel to the cross section (22) in order to record the object (16) with the surface (17) from at least three sides.

10. Method according to one of Claims 1 to 9, **characterized in that** the interior space (12) has a longitudinal axis (15), and **in that** the object (16) is displaced parallel to the longitudinal axis (15).

11. Method according to one of Claims 1 to 10, **characterized in that** the first and second strips (30, 31, 32, 33) are of different spectral design.

12. Method according to one of Claims 1 to 11, **characterized in that** the at least two strip patterns (26, 28) have the same period (36) and/or the same strip width.

13. Method according to one of Claims 1 to 12, **characterized in that** the at least two strip patterns have different periods (36) and/or strip widths.

14. Method according to one of Claims 1 to 13, **characterized in that** the images (66, 66') are used to determine a multiplicity of local surface inclinations (92), and **in that** the local surface inclinations are used to generate an output signal (96) which is representative of the properties of the surface (17).

15. Device for the optical inspection of a surface (17) on an object (16), in particular for the inspection of a reflective surface on a motor vehicle, having:
- a pattern (26, 28) with a number of lighter and darker strips (30-33), which form an at least largely continuously changing brightness profile (34) with a defined period (36), the pattern including at least a first strip pattern (26) with first strips (30, 31) and a second strip pattern (28) with second strips (32, 33), the first and second strips (30, 31, 32, 33) being of different design,
- a holder (20) for positioning the object (16) with the surface (17) in relation to the pattern (26, 28) in such a way that the brightness profile (34) falls onto the surface (17),
- at least one image recording unit (42; 100, 102, 104), which is arranged at a first position, for recording a first image (66) of the surface (17), including the brightness profile (34) falling thereon,
- a control unit (60), which is designed to control the recording of the first image (66) and of at least one further image (66'), it being possible to record the at least one further image (66') after displacement of the brightness profile (34) in relation to the surface (17), and
- an evaluation unit (60) for the determination of properties of the surface (17) as a function of the images,
the brightness profile (34) being spatially stationary, the holder (20) being designed to displace the object (16) with the surface (17) by a defined distance (64) relative to the spatially stationary brightness profile (34), the control unit (60) being designed to record the at least one further image (66') with the aid of an image recording unit (44, 46, 48; 100, 102, 104) at a second position, the first and the second positions being situated at a defined spacing (64) from one another, and the defined spacing (64) being equal to the defined distance (62), **characterized by** an interior space (12) with inner walls (24) which enclose the object (16) from at least three sides, the pattern (26, 28) extending over the enclosing inner walls (24), the strips (30-33) running along the inner walls (24) in spiral fashion, and the first and second strips (30, 31, 32, 33) being arranged transverse to one another.

## Revendications

1. Procédé d'inspection optique d'une surface (17) d'un objet (16), notamment pour l'inspection d'une surface réfléchissante d'un véhicule automobile, comprenant les étapes suivantes :
- préparation d'un motif (26, 28) avec un nombre de bandes claires (30, 32) et foncées (31, 33), qui forment une évolution de la luminosité (34) se déroulant, au moins dans une large mesure, de manière continue avec une période définie (36), le motif contenant au moins un premier motif de bandes (26) avec des premières bandes (30, 31) et un deuxième motif de bandes (28) avec des deuxièmes bandes (32, 33), les premières et les deuxièmes bandes (30, 31, 32, 33) étant de formes différentes,
- positionnement de l'objet (16) avec la surface (17) par rapport au motif (26, 28) de telle sorte que l'évolution de la luminosité (34) tombe sur la surface (17),
- enregistrement d'une première image (66) de la surface (17) englobant celle sur laquelle tombe l'évolution de la luminosité (34) à l'aide d'une unité d'enregistrement d'images (42 ; 100, 102, 104) disposée à une première position,
- décalage de l'évolution de la luminosité (34) par rapport à la surface (17) et enregistrement d'au moins une autre image (66') de la surface (17) avec l'évolution de la luminosité (34) décalée, et
- détermination de caractéristiques de la surface (17) en fonction des images (66, 66'),
dans lequel l'évolution de la luminosité (34) est maintenue stationnaire dans l'espace, dans lequel l'objet (16) avec la surface (17) est décalé d'une distance définie (64) par rapport à l'évolution de la luminosité (34) stationnaire dans l'espace, dans lequel au moins ladite autre image (66') est enregistrée par une unité d'enregistrement d'images (44, 46, 48 ; 100, 102, 104) disposée à une deuxième position, et dont la première et la deuxième position se situent à un écartement mutuel défini (62) identique à la distance définie (64), **caractérisé en ce que** l'objet (16) est décalé dans un espace intérieur (12) avec des parois intérieures (24) entourant l'objet (16) par au moins trois côtés, le motif (26, 28) s'étendant sur les parois latérales (24) entourant l'objet, les bandes (30-33) courant le long des parois latérales (24) à la manière de spirales, et les premières et deuxièmes bandes (30, 31, 32, 33) étant disposées transversalement les unes par rapport aux autres.

2. Procédé selon la revendication 1, **caractérisé en ce que** l'autre image (66') contient au moins une deuxième et une troisième image, l'objet (16) avec la surface (17) étant de nouveau décalé de la distance définie (64) entre la deuxième et la troisième image, et la deuxième et la troisième image étant enregistrées au même écartement mutuel défini (62) que la première et la deuxième image (66, 66').

3. Procédé selon la revendication 1 ou 2, **caractérisé en ce que** la première image (66) est enregistrée par une première unité d'enregistrement d'images (42) et **en ce qu'**au moins une autre image (66') est enregistrée par au moins une autre unité d'enregistrement d'images (44, 46, 48), la première unité (42) et au moins une autre unité d'enregistrement d'images (44, 46, 48) étant disposées à un écartement mutuel défini (62).

4. Procédé selon la revendication 3, **caractérisé en ce que** la première unité et au moins une autre unité d'enregistrement d'images (42-48) sont des caméras linéaires comportant respectivement une disposition (52) sous forme de lignes de points d'images.

5. Procédé selon la revendication 3 ou 4, **caractérisé en ce que** la première unité et au moins une autre unité d'enregistrement d'images (42-48) comportent respectivement un axe de vision (50), les axes de vision (50) étant, dans une large mesure, parallèles entre eux.

6. Procédé selon l'une des revendications 3 à 5, **caractérisé en ce que** la première unité d'enregistrement d'images (42) et au moins une autre unité d'enregistrement d'images (44-48) constituent une tête de caméra intégrée (38, 40).

7. Procédé selon l'une des revendications 3 à 6, **caractérisé en ce que** les unités d'enregistrement d'images (42-48 ; 100-104) sont des caméra de surface comportant respectivement une disposition matricielle de points d'images.

8. Procédé selon la revendication 1 ou 2, **caractérisé en ce que** la première image (66) et au moins une autre image (66') sont enregistrées par une unité d'enregistrement d'images (100, 102, 104) qu'on décale conjointement avec l'objet (16).

9. Procédé selon l'une des revendications 1 à 8, **caractérisé en ce que** l'espace intérieur (12) possède une section transversale (22) et qu'une multiplicité d'unités d'enregistrement d'images (38a, 38b, 38c) est répartie parallèlement à la section transversale (22) pour enregistrer l'objet (16) avec la surface (17) à partir d'au moins trois côtés.

10. Procédé selon l'une des revendications 1 à 9, **caractérisé en ce que** l'espace intérieur (12) possède un axe longitudinal (15) et qu'on décale l'objet (16) parallèlement à l'axe longitudinal (15).

11. Procédé selon l'une des revendications 1 à 10, **caractérisé en ce que** les premières et les deuxièmes bandes (30, 31, 32, 33) sont formées de spectres différents.

12. Procédé selon l'une des revendications 1 à 11, **caractérisé en ce qu'**au moins les deux motifs de bandes (26, 28) possèdent la même période (36) et/ou la même largeur de bandes.

13. Procédé selon l'une des revendications 1 à 12, **caractérisé en ce qu'**au moins les deux motifs de bandes (26, 28) possèdent des périodes (36) et/ou des largeurs de bandes différentes.

14. Procédé selon l'une des revendications 1 à 13, **caractérisé en ce que** l'on détermine une multiplicité d'inclinaisons locales de surface à l'aide des images (66, 66'), et **en ce qu'**à l'aide des inclinaisons locales de surface, on génère un signal de sortie (96) représentatif des caractéristiques de la surface (17).

15. Dispositif d'inspection optique d'une surface (17) d'un objet (16), notamment pour l'inspection d'une surface réfléchissante d'un véhicule automobile, comprenant :
- un motif (26, 28) avec un nombre de bandes claires et foncées (30-33), qui forment une évolution de la luminosité (34) se déroulant, au moins dans une large mesure, de manière continue avec une période définie (36), le motif contenant au moins un premier motif de bandes (26) avec des premières bandes (30, 31) et un deuxième motif de bandes (28) avec des deuxièmes bandes (32, 33), les premières et les deuxièmes bandes (30, 31, 32, 33) étant de formes variables,
- un support (20) pour le positionnement de l'objet (16) avec la surface (17) par rapport au motif (26, 28) de telle sorte que l'évolution de la luminosité (34) tombe sur la surface (17),
- au moins une unité d'enregistrement d'images (42 ; 100, 102, 104) disposée à une première position, pour l'enregistrement d'une première image (66) de la surface (17) englobant celle sur laquelle tombe l'évolution de la luminosité (34),
- une unité de commande (60) développée pour commander l'enregistrement de la première image (66) et d'au moins une autre image (66'), au moins ladite autre image (66') pouvant être enregistrée après décalage de l'évolution de la luminosité (34) par rapport à la surface (17), et
- une unité de traitement (60) pour la détermination de caractéristiques de la surface (17) en fonction des images,
dans lequel l'évolution de la luminosité (34) est stationnaire dans l'espace, dans lequel l'enregistrement (20) est développé pour décaler l'objet (16) avec la surface (17) d'une distance définie (64) par rapport à l'évolution de la luminosité (34) stationnaire dans l'espace, dans lequel l'unité de commande (60) est développée pour enregistrer au moins l'autre image (66') avec une unité d'enregistrement d'images (44, 46, 48 ; 100, 102, 104) à une deuxième position, la première et la deuxième position se situant à un écartement mutuel défini (64) et l'écartement mutuel défini (64) étant identique à la distance définie (62), **caractérisé par** un espace intérieur (12) avec des parois intérieures (24) entourant l'objet (16) par au moins trois côtés, le motif (26, 28) s'étendant sur les parois latérales (24) entourant l'objet, les bandes (30-33) courant le long des parois latérales (24) à la manière de spirales, et les premières et deuxièmes bandes (30, 31, 32, 33) étant disposées transversalement les unes par rapport aux autres.
